# EUROPÄISCHE PATENTSCHRIFT

(11) **EP 2 356 286 B1**
(45) Veröffentlichungstag und Bekanntmachung des Hinweises auf die Patenterteilung: **28.01.2015**
(21) Anmeldenummer: 09801136.4
(22) Anmeldetag: 03.11.2009
(51) Int. Cl.: E02B 15/04, B63B 35/32, B01D 17/02

(54) **VORRICHTUNG UND VERFAHREN ZUM AUFNEHMEN VON PARTIKELN VON EINER GEWÄSSEROBERFLÄCHE**
APPARATUS AND METHOD FOR PICKING UP PARTICLES FROM THE SURFACE OF A WATER SYSTEM
DISPOSITIF ET PROCÉDÉ DE CAPTURE DE PARTICULES D'UNE SURFACE D'EAU

(30) Priorität: 03.11.2008 DE 102008055633
(43) Veröffentlichungstag der Anmeldung: 17.08.2011
(73) Patentinhaber: Technische Universität Berlin, 10623 Berlin (DE)
(72) Erfinder: CLAUSS, Guenther, 14197 Berlin (DE); SPRENGER, Florian, 12157 Berlin (DE)
(74) Vertreter: Bittner, Thomas L.
(86) Internationale Anmeldenummer: PCT/DE2009/001526
(87) Internationale Veröffentlichungsnummer: WO 2010/060405

(56) Entgegenhaltungen:
- EP-A1- 0 219 164
- DE-A1- 10 221 069
- GB-A- 1 440 024
- US-A- 5 292 430

## Beschreibung

Die Erfindung betrifft eine selbstschwimmende Vorrichtung und ein Verfahren zum Aufnehmen von Partikeln von einer Gewässeroberfläche, insbesondere Öl-, Algen- oder Schmutzpartikel.

### Hintergrund der Erfindung

Es besteht vielfach Bedarf, Gewässeroberflächen von Seen oder Meeren von Verschmutzungen zu säubern. In der Vergangenheit endeten beispielsweise Schiffshavarien mit verheerenden Folgen für die maritime Fauna und Flora und zogen darüber hinaus eine wirtschaftliche Katastrophe für die in den verseuchten Gebieten ansässige Fischerei- und Tourismusbranche nach sich. Folge einer Schiffshavarie kann insbesondere eine Verschmutzung mit auslaufendem Öl sein.

Die Ursachen für Ölverschmutzungen von Gewässeroberflächen sind jedoch nicht auf Schiffsunfälle beschränkt. Öleintrag erfolgt auch durch Industrie in küstennahen Gebieten, undichte Pipelines am Ort der Ölförderung selbst, natürlichen Öleintrag am Meeresboden sowie bewussten Öleintrag durch Schiffsbesatzungen. Zur Beseitigung der auf verschiedene Weise entstehenden Ölteppiche im Bereich der Gewässeroberfläche werden Ölbekämpfungssysteme, insbesondere Ölbekämpfungsschiffe genutzt. In Verbindung mit dem Abschöpfprozess des ausgelaufenen Öls besteht häufig das Problem, dass aufgrund des Seegangs die Ölbekämpfungsmaßnahmen unterbrochen werden müssen. Derartige Unterbrechungen haben nachteilige Folgen für den gesamten Ölbekämpfungseinsatz, insbesondere kann sich das ausgelaufene Öl über einen größeren Bereich der Gewässeroberfläche als dünne Ölschicht ausbreiten. Darüber hinaus kommt es bei Seegang zum Zerteilen des Ölteppichs in kleine Öllachen, die im Rahmen des Bekämpfungseinsatzes nur schwer zu orten sind. Des Weiteren emulgiert das Öl, d. h. es verbindet sich mit Wasser und Luft und wird hierdurch zunehmend viskoser, was die Trennung des Öls von der Gewässeroberfläche sowie die spätere Separation an Bord der Ölbekämpfungsschiffe deutlich erschwert.

Aus dem Dokument DE 21 21 646 A1 ist ein Wasserfahrzeug zum Bekämpfen von Ölschichten bekannt. Bei dem Wasserfahrzeug ist im Bereich eines Bugabschnitts eine Öffnung vorgesehen, durch die beim Fahren des Wasserfahrzeugs über eine Gewässeroberfläche mit Schmutzpartikeln, insbesondere Ölpartikeln, verschmutztes Wasser in einen Laderaum gelangt, aus dem die Schmutzpartikel mit Hilfe einer Saugeinrichtung abgesaugt werden können. Nach dem Passieren der Öffnung in dem Bugabschnitt strömt das mit Schmutzpartikeln beladene Wasser an einer Kante vorbei in den Laderaum.

Aus dem Dokument DE 102 21 069 B4 ist eine Vorrichtung zum Aufnehmen von Partikeln von einer Gewässeroberfläche bekannt, bei dem eine hydrodynamische Separation genutzt wird. Beim Abschöpfen eines Ölfilms auf einem Gewässer strömt dieser entlang einer Bugunterseite der Ölaufnahmevorrichtung bis zu einer Separationsklinge, die den Ölfilm von der Hauptströmung trennt und in einen Partikelseparationsraum leitet, der auch als Moonpool bezeichnet wird. An einer Abrisskante der Separationsklinge entsteht ein Wirbel, der das aufzunehmende Öl zur freien Wasseroberfläche in dem Partikelseparationsraum beschleunigt. Das auf diese Weise in dem Partikelseparationsraum gelangte partikelhaltige Wasser wird weiter aufbereitet, indem die Ölpartikel über eine Rampe aus dem Partikelseparationsraum in einen Partikelsammelraum gelangen. Der Partikelsammelraum dient der Konzentration der separierten Partikel. Von dort werden die Partikel in Speichertanks gepumpt.

Ein Schlüssel zur effizienten Nutzung einer solchen Vorrichtung ist die Minimierung des über die Rampe in den Partikelsammelraum gelangenden Wassers. Um dies zu erreichen und gleichzeitig den sich aufgrund der kontinuierlichen Aufnahme von Öl dynamisch ändernden Tiefgang des Schiffes auszugleichen, wurde vorgeschlagen, höhenverstellbare Böschungen zwischen dem Partikelseparations- und dem Partikelsammelraum zu nutzen. Auch der Einsatz von Ballastierungssystemen wäre denkbar. Diese Maßnahmen erfordern jedoch einen relativ hohen technischen Aufwand und nehmen viel Raum an Bord des die Vorrichtung aufnehmenden Trägerschiffes ein. Dieses geht zu Lasten des für die aufzunehmenden Partikel zur Verfügung stehenden Speichervolumens.

Das Dokument EP 0 219 164 A1 beschreibt eine Vorrichtung mit einem Ablaufkasten zum Entfernen einer Flüssigkeit aus einer Mischung von Flüssigkeiten in einem Sammelbehälter. Der Ablaufkasten innerhalb des Sammelbehälters weist ein Stauwehr für den Durchlass der Flüssigkeit, welche im Ablaufkasten entfernt wird, und eine Rohrleitung zum Ableiten der Flüssigkeit aus dem Ablaufkasten auf. Der Ablaufkasten ist im Sammelbehälter auf und ab bewegbar. Die vertikale Position des Ablaufkastens im Sammelbehälter wird zur Verbesserung der Trennung der Flüssigkeiten mittels Positionskontrolle des Stauwehrs durch eine mit dem Ablaufbehälter verbundene Höhenverstelleinrichtung bestimmt. Die Höhenverstelleinrichtung wird in Abhängigkeit von der Ausgabe eines Sensors gesteuert, der das Flüssigkeitsniveau im Ablagekasten misst.

Das Dokument GB 1 440 024 A beschreibt eine Vorrichtung für eine Öl- und Abfallentsorgung mit Hilfe eines am Einlass eines Auffanggefäßes angebrachten Tores, dessen obere Kante einen Überlauf für verschmutztes Wasser mit eingeschwemmten Verunreinigungen bildet. Das Tor steht in Kontakt mit den Wänden des Auffanggefäßes und ist an einer Schwenkachse mit einer horizontalen Achse angebracht, sodass das Tor um die horizontale Achse geschwenkt werden kann. Die Außenseite des Tores, das im Einsatz zum Wasserkörper, in dem sich die Vorrichtung befindet, gerichtet ist, bildet einen Teil eines Zylinders, dessen Achse mit der horizontalen Achse der Schwenkachse für das Tor übereinstimmt. Ein oder mehrere Schwimmer sind zentral an der Schwenkachse des Tores angeordnet und mit dem Tor verbunden, wobei die obere Kante des Tores im Einsatz in einer konstanten Tiefe unter der Wasseroberfläche gehalten werden kann, sodass eine Wasserschicht mit konstanter Dicke durch das Tor in das Auffanggefäß strömt.

Das Dokument US 5 292 430 A betrifft ein Ölrückgewinnungs- und Speicherungsschiff mit einer Tankkonfiguration eines konventionellen Rohölträgers. Die Konfiguration ist modifiziert, dahingehend, dass Einlasstüren entlang der gegenüberliegenden Schiffseiten und eine Schwimmschirmanordnung zur Maximierung der sich ansammelnden treibenden Ölschwaden bereitgestellt sind. Die seitlichen Einlasstüren münden in Schleusen oder seeberuhigende Abteilungen mit verstellbaren Wehrtüren, die in erste Vorabscheidungstanks an der Backbordund Steuerbordseite münden. Verstellbare Wehrtüren öffnen vom ersten Vorabscheidungstank zum zweiten Abscheidungstank. Eine ausgewählte Anzahl von Ladetankern ist über Verbindungsglieder verbunden, die den Flüssigkeitstransport von einem Tanker zum nächsten Tanker innerhalb einer Serie oder Kaskade in der Weise erlauben, dass das Öl von öligem Wasser dekantiert wird und im Wesentlichen ölfreies Wasser über Bord des letzen Tankers der Kaskade entladen wird.

### Zusammenfassung der Erfindung

Aufgabe der Erfindung ist es, eine selbstschwimmende Vorrichtung und ein Verfahren zum Aufnehmen von Partikeln von einer Gewässeroberfläche zu schaffen, bei denen die Effizienz der Partikelaufnahme und der Partikelseparation optimiert sind, insbesondere bei Seegang.

Diese Aufgabe wird erfindungsgemäß durch eine selbstschwimmende Vorrichtung zum Aufnehmen von Partikeln von einer Gewässeroberfläche nach dem unabhängigen Anspruch 1 sowie ein Verfahren zum Aufnehmen von Partikeln von einer Gewässeroberfläche nach dem unabhängigen Anspruch 5 gelöst. Vorteilhafte Ausgestaltungen der Erfindung sind Gegenstand von abhängigen Unteransprüchen.

Die selbstschwimmende Vorrichtung nutzt eine hydrodynamische Separationstechnik. Mit Hilfe der Einstelleinrichtung ist es ermöglicht, die Füllstandshöhe des partikelhaltigen Wassers nach dessen Einströmen durch die Einströmöffnung hindurch in dem Partikelseparationsraum optimiert einzustellen, so dass die Separation der Partikel aus dem partikelhaltigen Wasser in den Partikelsammelraum den jeweiligen Bedingungen, beispielsweise einem Seegang entsprechend optimierbar ist. Mit Hilfe der Füllstandshöheneinstellung kann die Oberkante des Füllstands des partikelhaltigen Wassers in dem Partikelseparationsraum relativ zur Separationseinrichtung eingestellt werden, was der Minimierung des Wasseranteils im Partikelsammelraum und somit der effizienten Nutzung von bordeigenen Speichertanks dient. Im Unterschied zum Stand der Technik ist es hierbei nicht notwendig, die Separationseinrichtung selbst zu verlagern, auch wenn dieses in einer Ausgestaltung der Erfindung ergänzend vorgesehen sein kann. Unabhängig von einer solchen Verstellung der Separationseinrichtung kann also der Trennprozess zum Sammeln der Partikel in dem Partikelsammelraum optimiert werden.

In einer Ausführungsform sind ein oder mehrere Partikelsammelräume mehrseitig oder sogar allseitig des Partikelseparationsraums gebildet, wobei ein oder mehrere Separationseinrichtungen, die zum Beispiel mit Rampen- oder Böschungselementen gebildet sind, die Räume trennen.

Die Vorrichtung zum Aufnehmen der Partikel von der Gewässeroberfläche kann bevorzugt auf einem selbstfahrenden Wasserfahrzeug mit eigener Antriebseinrichtung oder einer Schubeinheit ausgeführt sein, die von einem Wasserfahrzeug über die Gewässeroberfläche bewegt wird.

Es ist vorgesehen, dass der Partikelseparationsraum als ein im Betrieb gegenüber der Umgebung hermetisch abgeschlossener Raum gebildet ist. Insbesondere ein Abschluss gegenüber dem Umgebungsluftdruck kann vorgesehen sein. Bevorzugt umfasst der abgeschlossene Raum neben dem Partikelseparationsraum auch den einen oder die mehreren Partikelsammelräume.

Da der Partikelseparationsraum und der oder die Partikelsammelräume in einer Ausgestaltung in Verbindung stehen, erfolgt die Innendruckregelung in diesem Fall für einen hermetisch abgeschlossenen Gesamtraum, welcher den Partikelseparationsraum und den oder die Partikelsammelräume umfasst. Mittels Erhöhen des Innendrucks im Partikelseparationsraum, zum Beispiel mit Hilfe eines Kompressors, sinkt der Wasserspiegel im Schiffsinneren. Gleichzeitig verringert sich der Tiefgang des Trägerschiffes, wobei die Größenordnung dieser Änderung von der Ausführung des Trägerschiffes abhängt. Umgekehrt steigt der Wasserspiegel im Schiffsinneren bei Verringerung des Luftdrucks im Partikelseparationsraum an.

Eine vorteilhafte Ausführungsform der Erfindung sieht vor, dass die Separationseinrichtung mit einem Böschungselement gebildet ist. Ein Böschungselement kann zum Beispiel entweder heck- oder bugseitig zwischen dem Partikelseparationsraum und dem Partikelsammelraum vorgesehen sein. Auch eine kombinierte heck- und bugseitige Ausbildung kann vorgesehen sein.

Bevorzugt sieht eine Fortbildung der Erfindung vor, dass die Einstelleinrichtung an eine Regelungseinrichtung gekoppelt ist, die konfiguriert ist, seegangs- und / oder tiefgangsbezogene Messdaten zu verarbeiten und hieraus Steuerungsdaten für die Einstelleinrichtung abzuleiten. In einer Ausführung kann vorgesehen sein, das der abgeschlossene Raum sowie die Einstelleinrichtung über eine automatische Wasserstandskontrollvorrichtung und / oder optisch von der Brücke eines Trägerschiffes aus von der Besatzung überwacht und gesteuert werden. Auf diese Weise kann auf seegangs- und / oder tiefgangsbezogene Änderungen der über die Gewässeroberfläche bewegten Vorrichtung reagiert werden, um situationsabhängig die Abtrennung der Partikel zu optimieren. Es kann so der Tiefgang der Vorrichtung auf dem zu reinigenden Gewässer beeinflusst werden.

Bei einer vorteilhaften Ausgestaltung der Erfindung kann eine der Einströmöffnung zugeordnete Separationsklinge vorgesehen sein.

Eine vorteilhafte Ausführung der Erfindung sieht wenigstens ein wirbelstabilisierendes Formelement im Partikelsammelraum vor.

In Verbindung mit vorteilhaften Ausgestaltungen des Verfahrens zum Aufnehmen von Partikeln von einer Gewässeroberfläche gelten die im Zusammenhang mit zugehörigen Fortbildungen der Vorrichtung zum Aufnehmen von Partikeln von der Gewässeroberfläche gemachten Ausführungen entsprechend.

### Beschreibung bevorzugter Ausführungsbeispiele

Die Erfindung wird im Folgenden anhand von Ausführungsbeispielen unter Bezugnahme auf Figuren einer Zeichnung näher erläutert. Hierbei zeigen:
- Fig. 1: eine Vorrichtung zum Aufnehmen von Partikeln von einer Gewässeroberfläche im Querschnitt und
- Fig. 2: eine perspektivische Darstellung der Vorrichtung aus Fig. 1 im Aufriss.

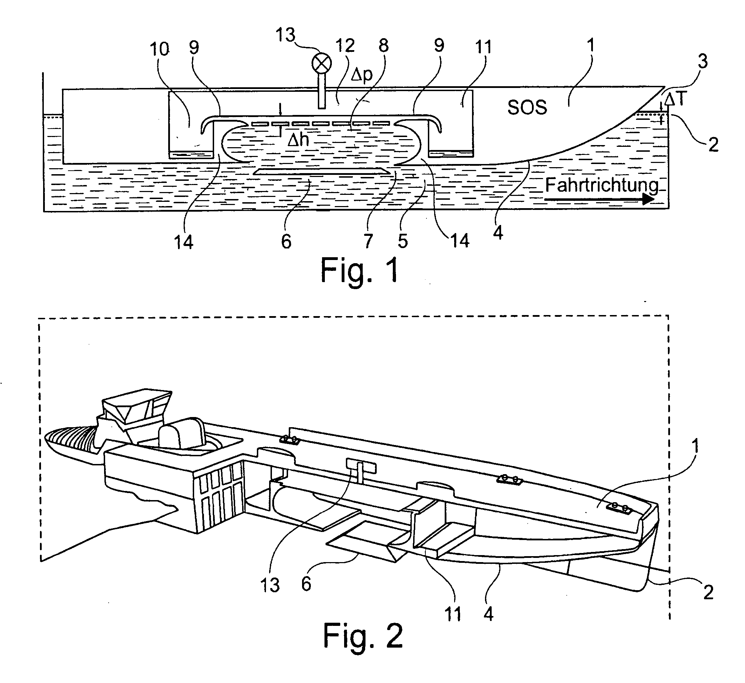

Fig. 1 zeigt eine Vorrichtung zum Aufnehmen von Partikeln von einer Gewässeroberfläche. Ein Rumpfkörper 1 wird über eine Gewässeroberfläche 2 zum Säubern der Gewässeroberfläche 2 bewegt. Beim Bewegen des Rumpfköpers 1 über die Gewässeroberfläche 2 werden Wellen mittels eines Bugabschnitts 3 des Rumpfkörpers 1 beruhigt. Auf der Gewässeroberfläche 2 schwimmende Schmutzpartikel werden durch das Bewegen des Rumpfkörpers 1 über die Gewässeroberfläche 2 in eine Strömung gedrängt, die entlang einer unteren Oberfläche 4 des Rumpfkörpers 1 fließt. Die Strömung mit den Schmutzpartikeln strömt unterhalb des Rumpfkörpers 1 in einen Einlaufbereich 5, in welchem benachbart zu einer Separationsklinge 6 eine Einström- oder Einlauföffnung 7 gebildet ist, durch welche hindurch partikelhaltiges Wasser dann in einen Partikelseparationsraum 8 gelangt. Hinter der Einström- oder Einlauföffnung 7 erfolgt eine Wirbelbildung, so dass die Schmutzpartikel in dem Partikelseparationsraum 8 nach oben gelangen, also an die Wasseroberfläche. Ein zweiter Wirbel bildet sich über der Auslassöffnung des Partikelseparationsraumes 8. Spezielle Formelemente 14 dienen der Stabilisierung der Wirbel im Partikelseparationsraum 8. Hierdurch kann zum Beispiel ein pulsierendes Verhalten der Wirbel minimiert oder sogar ganz verhindert werden.

Über Böschungs- oder Rampenelemente 9, die zu einer Separationseinrichtung zum Separieren der Partikel gehören, erfolgt eine Trennung der zu separierenden Partikel aus dem Partikelseparationsraum 8 in benachbart angeordnete Partikelsammelräume 10, 11, in denen die Partikel aufkonzentriert werden. Das genutzte Separationsverfahren entspricht dem Prinzip einer hydrodynamischen Separation.

Bei dem in Fig. 1 dargestellten Betrieb der Vorrichtung zum Aufnehmen von Partikeln von der Gewässeroberfläche 2 ist unter Einbeziehung des Partikelseparationsraums 8 und der Partikelsammelräume 10, 11 ein geschlossener Raum 12 gebildet, der in dargestellten Ausführungsform gegenüber der Umgebung hermetisch abgeriegelt ist, insbesondere mittels einer luftdichten Ausgestaltung. Mit Hilfe einer Druckregulierungseinrichtung 13 wird ein Innendruck in dem geschlossenen Raum 12 eingestellt, um auf diese Weise eine Füllstandshöhe des partikelhaltigen Wassers in dem Partikelseparationsraum 8 einzustellen, wodurch die Füllstandshöhe relativ zu den Böschungs- oder Rampenelementen 9 eingestellt wird, was wiederum die Separation der Schmutzpartikel aus dem Partikelseparationsraum 8 in die Partikelsammelräume 10,11 beeinflusst. Mit Hilfe der Innendruckregelung kann auf seegangs- und / oder tiefgangsrelevante Änderungen für die Vorrichtung reagiert werden, um situationsabhängig eine optimale Separation der Partikel zu gewährleisten. Hierzu können eine automatische Wasserstandskontrollvorrichtung und / oder eine optische Überwachung des geschlossenen Raumes 12 vorgesehen sein. Durch Kompressoren kann der Innendruck erhöht und der Wasserspiegel gesenkt bzw. der Innendruck gesenkt und der Wasserspiegel angehoben werden.

Fig. 2 zeigt eine perspektivische Darstellung der Vorrichtung aus Fig. 1 im Aufriss. Für gleiche Merkmale werden Fig. 2 die gleichen Bezugszeichen wie in Fig. 1 verwendet.

## Patentansprüche

1. Selbstschwimmende Vorrichtung zum Aufnehmen von Partikeln von einer Gewässeroberfläche (2) mittels einer hydrodynamischen Separationstechnik beim Bewegen über die Gewässeroberfläche (2), mit:
- einem Partikelseparationsraum (8), der mit einer unterhalb der Gewässeroberfläche anzuordnende Einströmöffnung (7) in Verbindung steht, durch die partikelhaltiges Wasser in den Partikelseparationsraum (8) gelangen kann,
- einem Partikelsammelraum (10; 11), in welchen aus dem partikelhaltigen Wasser separierte Partikel von dem Partikelseparationsraum (8) über eine Separationseinrichtung (9) gelangen, und
- einer Einstelleinrichtung (13),
**dadurch gekennzeichnet, dass** der Partikelseparationsraum (8) und der Partikelsammelraum (10; 11) als ein im Betrieb gegenüber der Umgebung hermetisch abgeschlossener Raum (12) gebildet ist und dass die Einstelleinrichtung (13) eine Druckregeleinrichtung aufweist, die konfiguriert ist, eine Füllstandshöhe des partikelhaltigen Wassers in dem im Betrieb gegenüber der Umgebung hermetisch abgeschlossenen Partikelseparationsraum (8) mittels einer Innendruckregelung einzustellen.

2. Selbstschwimmende Vorrichtung nach Anspruch 1, **dadurch gekennzeichnet, dass** die Separationseinrichtung (9) mit einem Böschungselement gebildet ist.

3. Selbstschwimmende Vorrichtung nach Anspruch 1 oder 2, **gekennzeichnet durch** eine der Einströmöffnung (7) zugeordnete Separationsklinge (6).

4. Selbstschwimmende Vorrichtung nach mindestens einem der vorangehenden Ansprüche, **gekennzeichnet durch** wenigstens ein wirbelstabilisierendes Formelement (14) im Partikelsammelraum (8).

5. Verfahren zum Aufnehmen von Partikeln von einer Gewässeroberfläche (2), wobei das Verfahren die folgenden Schritte umfasst:
- Bewegen einer selbstschwimmenden Vorrichtung zum Aufnehmen von Partikeln von der Gewässeroberfläche (2) über die Gewässeroberfläche (2),
- Aufnehmen von partikelhaltigem Wasser von der Gewässeroberfläche (2) mittels einer hydrodynamischen Separationstechnik über eine unterhalb der Gewässeroberfläche angeordnete Einströmöffnung (7) in einen Partikelseparationsraum (8) der selbstschwimmenden Vorrichtung, und
- Separieren von Partikeln aus dem partikelhaltigen Wasser, indem die Partikel aus dem Partikelseparationsraum (8) über eine Separationseinrichtung (9) in einen Partikelsammelraum (10; 11) überführt werden,
**dadurch gekennzeichnet, dass** der Partikelseparationsraum (8) ein gegenüber der Umgebung hermetisch abgeschlossener Raum ist und dass beim Separieren der Partikel mittels einer Einstelleinrichtung (13) eine Füllstandshöhe des partikelhaltigen Wassers in dem hermetisch abgeschlossen Partikelseparationsraum (8) reguliert wird, indem mittels einer von der Einstelleinrichtung (13) umfassten Druckregeleinrichtung eine Innendruckregelung ausgeführt wird.

6. Verfahren nach Anspruch 5, **dadurch gekennzeichnet, dass** die Partikel beim Separieren über ein von der Separationseinrichtung (9) umfasste Böschungselement geführt werden.

7. Verfahren nach Anspruch 5 oder 6, **dadurch gekennzeichnet, dass** das partikelhaltige Wasser von der Gewässeroberfläche (2) über die Einströmöffnung (7) mittels einer der Einströmöffnung (7) zugeordneten Separationsklinge (6) unter nachfolgender Ausnutzung einer Wirbelstrombildung aufgenommen wird.

8. Verfahren nach mindestens einem der Ansprüche 5 bis 7, **dadurch gekennzeichnet, dass** eine Wirbelbildung in dem partikelhaltigen Wasser in dem Partikelseparationsraum (8) mit Hilfe wenigstens eines wirbelstabilisierenden Formelementes (14) stabilisiert wird.

## Claims

1. A self-floating apparatus for picking up particles from a surface (2) of a water system by a hydrodynamic separation technique while moving over the surface (2) of the water system, comprising:
- a particle separation space (8) which is connected to an inflow opening (7) through which the water that contains particles can enter the particle separation space (8), wherein the inflow opening (7) is arranged below the surface of the water system,
- a particle-collecting space (10; 11), into which particles separated from the water that contains particles reach from the particle separation space (8) via a separation mechanism (9), and
- an adjustment mechanism (13),
**characterized in that** the particle separation space (8) and the particle-collecting space (10; 11) are designed as a space that is hermetically sealed with respect to the environment and that the adjustment mechanism (13) has a pressure-regulating device, which is configured to adjust the filling level of the water that contains particles in the hermetically sealed particle separation space (8) by means of a regulation of the internal pressure.

2. The self-floating apparatus according to claim 1, **characterized in that** the separation mechanism (9) is formed by an embankment element.

3. The self-floating apparatus according to claim 1 or 2, **characterized by** a separation edge (6) which is assigned to the inflow opening (7).

4. The self-floating apparatus according to at least one of the preceding claims, **characterized by** at least one eddy-stabilizing form element (14) in the particle-collecting space (8).

5. A method for picking up particles from the surface of a water system, wherein the method comprises the following steps:
- moving a self-floating apparatus for picking up particles from the surface (2) of the water system over the surface (2) of the water system,
- receiving water that contains particles from the surface (2) of the water system by a hydrodynamic separation technique through an inflow opening (7) in a particle separation space (8) of the self-floating apparatus, wherein the inflow opening (7) is arranged below the surface of the water system, and
- separating particles from the water that contains particles by transferring the particles from the particle separation space (8) into a particle-collecting space (10; 11) via a separation mechanism (9),
**characterized in that** the particle separation space (8) is designed as a space that is hermetically sealed with respect to the environment and that the adjustment mechanism (13) has a pressure-regulating device, which is configured to adjust the filling level of the water that contains particles in the hermetically sealed particle separation space (8) by means of a regulation of the internal pressure.

6. The method according to claim 5, **characterized in that** the particles are passed over an embankment element comprised by the separation mechanism (9) in separation.

7. The method according to claim 5 or 6, **characterized in that** the water containing particles is picked up from the surface (2) of the water system through the inflow opening (7) by means of a separation edge (6) assigned to the inflow opening (7) with subsequent utilization of an eddy formation.

8. The method according to at least one of claims 5 to 7, **characterized in that** an eddy is formed in the water that contains particles in the particle separation space (8) and stabilized by means of at least one eddy-stabilizing form element (14).

## Revendications

1. Dispositif auto-flottant pour l'admission de particules à partir d'un plan d'eau (2) au moyen d'une technique de séparation hydrodynamique lors du déplacement sur le plan d'eau (2), avec :
- une chambre de séparation de particules (8) reliée à une ouverture d'arrivée (7) destinée à être placée sous la surface de l'eau, à travers laquelle l'eau contenant des particules peut arriver dans la chambre de séparation de particules (8),
- une chambre de collecte de particules (10 ; 11), dans laquelle les particules séparées à partir de l'eau contenant des particules arrivent depuis la chambre de séparation de particules (8), en passant par un dispositif de séparation (9), et
- un dispositif de réglage (13),
**caractérisé en ce que** la chambre de séparation de particules (8) et la chambre de collecte de particules (10 ; 11) forment un espace (12) fermé hermétiquement par rapport à l'environnement pendant le fonctionnement, et **en ce que** le dispositif de réglage (13) comporte un dispositif de réglage de pression configuré pour régler une hauteur de niveau de remplissage de l'eau contenant des particules dans la chambre de séparation de particules (8) fermée hermétiquement par rapport à l'environnement pendant le fonctionnement, au moyen d'un réglage de pression interne.

2. Dispositif auto-flottant selon la revendication 1, **caractérisé en ce que** le dispositif de séparation (9) est conçu avec un élément de berge.

3. Dispositif auto-flottant selon la revendication 1 ou 2, **caractérisé par** une lame de séparation (6) attribuée à l'ouverture d'arrivée (7).

4. Dispositif auto-flottant selon au moins l'une des revendications précédentes, **caractérisé par** au moins un élément façonné stabilisateur de tourbillons (14) dans la chambre de collecte de particules (10 ; 11).

5. Procédé pour l'admission de particules à partir d'un plan d'eau (2), le procédé comprenant les étapes suivantes :
- déplacement d'un dispositif auto-flottant pour l'admission de particules à partir du plan d'eau (2) sur le plan d'eau (2),
- admission d'eau contenant des particules à partir du plan d'eau (2), au moyen d'une technique de séparation hydrodynamique, par une ouverture d'arrivée (7) placée sous la surface de l'eau, dans une chambre de séparation de particules (8) du dispositif auto-flottant, et
- séparation de particules à partir de l'eau contenant des particules, en transférant les particules hors de la chambre de séparation de particules (8) vers une chambre de collecte de particules (10 ; 11) par le biais d'un dispositif de séparation (9),
**caractérisé en ce que** la chambre de séparation de particules (8) est un espace fermé hermétiquement par rapport à l'environnement, et **en ce que** lors de la séparation des particules, une hauteur de niveau de remplissage de l'eau contenant des particules est réglée au moyen d'un dispositif de réglage (13) dans la chambre de séparation de particules (8) fermée hermétiquement, en effectuant un réglage de la pression interne au moyen d'un dispositif de réglage de pression compris dans le dispositif de réglage (13).

6. Procédé selon la revendication 5, **caractérisé en ce que** lors de la séparation, les particules passent par un élément de berge compris dans le dispositif de séparation (9).

7. Procédé selon la revendication 5 ou 6, **caractérisé en ce que** l'eau contenant des particules est admise à partir du plan d'eau (2) par le biais d'une ouverture d'arrivée (7), au moyen d'une lame de séparation (6) attribuée à l'ouverture d'arrivée (7), en formant consécutivement un tourbillon.

8. Procédé selon au moins l'une des revendications 5 à 7, **caractérisé en ce qu'**une formation de tourbillons dans l'eau contenant des particules est stabilisée dans la chambre de séparation de particules (8) à l'aide d'au moins un élément façonné stabilisateur de tourbillons (14).
